# EUROPÄISCHE PATENTANMELDUNG

(11) **EP 0 937 586 A1**
(43) Veröffentlichungstag der Anmeldung: **25.08.1999**
(21) Anmeldenummer: 98810145.7
(22) Anmeldetag: 24.02.1998
(51) Int. Cl.: B60C 5/00, B60C 17/06

(54) **Für ein Fahrzeug bestimmtes Laufrad**

(71) Anmelder: Märk, Marco, 4144 Arlesheim (CH)
(72) Erfinder: Märk, Marco, 4144 Arlesheim (CH)
(74) Vertreter: Eder, Carl E.

(57) **Zusammenfassung**

Gegenstand der Erfindung ist ein neuartiges, der Luft-Bereifung dienendes Laufrad, das im wesentlichen zwei scheinbar unvereinbare Eigenschaften von Vollgummi- und Luftreifen, nämlich Robustheit und hohe Stossdämpfung in einem einzigen Rad verwirklicht. Dieses Laufrad (11) zeichnet sich dadurch aus, dass es einen vom Luftreifen (13) eingeschlossenen torusförmigen Schaumstoffhohlkörper (18) aus reversibel verformbarem Material mit einer Vielzahl von zur Aufnahme von Gas dienenden, geschlossenen Hohlräumen (18a) besitzt. Der wesentliche Vorteil der erfindungsgemässen Bereifung liegt auf der Hand. Eine Verletzung der Reifenhaut durch einen Stein oder Nagel führt nämlich nicht zwangsläufig zu einem sofortigen und vollständigen Luftverlust, so wie das bei bekannten Bereifungen vielfach der Fall ist. So kann der torusförmige Schaumstoffhohlkörper (18) selbst Luft in seinen Zellen (18a) speichern, was nicht nur das Weiterfahren für eine gewisse Zeit ermöglicht, sondern auch die Unfallgefahr bei einer Reifenpanne verringert. Weiterer Vorteil der erfindungsgemässen Bereifung sind darin zu sehen, dass die schalldämpfenden Eigenschaften des Schaumstoffes die Rollgeräusche des Laufrades (11) reduzieren und dass der gegebenenfalls in einem Luftschlauch eingeschlossene Schaumstoff-Torus innen hohl ist, was die Demontage des Luftreifens vom Felgen (12) vereinfacht.

## Beschreibung

Laufräder für Kraftfahrzeuge, wie etwa Automobile und Motorräder, sowie Laufräder für Mofas, Fahrräder, Anhänger und Handwagen besitzen eine Felge, in welcher ein Reifen aus natürlichem oder künstlichem Kautschuk eingesetzt ist. Je nach Art der Bereifung finden hierbei entweder Luftreifen oder Vollgummireifen Anwendung.

Abhängig von Fahrzeugtyp und Belastungsgrenze ist die eine oder andere Bereifungsart bevorzugt, wobei eine Vollgummibereifung gegenüber einer Bereifung mit Luftreifen den Vorteil hat, dass sie praktisch keine Wartung benötigt und gegenüber kleineren Verletzungen der Reifenhaut unempfindlich ist. Dafür haben aber Luftreifen den Vorzug, dass sie für höhere Geschwindigkeiten geeignet sind und eine bessere Stossdämpfung besitzen.

Bekannte Luftreifen besitzen einen Unterbau, auch Karkasse genannt, bestehend aus einer bestimmten Anzahl von gekreuzten Lagen aus Verstärkungsfasern wie zum Beispiel Seide, Polyamid oder Metall. Die Karkasse kann hierbei mehrschichtig ausgebildet sein, wobei zum Schutz gegen äussere Verletzungen mindestens eine Schicht aus einem dichten Gewebe aus Verstärkungsfasern besteht.

Die zur Bereifung mit Luftreifen bestimmten Laufräder können wahlweise mit oder ohne Luftschlauch ausgebildet sein. Laufräder ohne separaten Luftschlauch setzen voraus, dass der Zwischenraum zwischen der Felge und dem Luftreifen luftdicht abgeschlossen ist, so wie das zum Beispiel bei Automobilen der Fall ist.

Bei Fahrrädern, welche vorzugsweise Laufräder mit einem Luftschlauch aufweisen, wird die gesamte Energie, die zur Fortbewegung erforderlich ist, von den Muskeln des Fahrers aufgebracht. Deshalb achten Reifenkonstrukteure in diesem Fall besonders auf ein geringes Reifengewicht und auf einen minimalen Rollwiderstand. Das hat zur Folge, dass insbesondere Reifen für Fahrräder mangels Robustheit sehr leicht verletzt werden können und dass bereits eine geringfügige Verletzung der Reifenhaut zu einer Verletzung des Luftschlauches und dadurch zu einem sofortigen und vollständigen Luftablass führt, was schliesslich das Weiterfahren verhindert.

Gegenstand der Erfindung ist ein neuartiges, der Luft-Bereifung dienendes Laufrad, das die vorstehend genannten, scheinbar unvereinbaren Eigenschaften von Vollgummi- und Luftreifen, nämlich Robustheit, Wartungsfreundlichkeit, Eignung für hohe Geschwindigkeiten und hohe Stossdämpfung in einem einzigen Rad verwirklicht. Dieses Laufrad ist dabei dadurch gekennzeichnet, dass es einen torusförmigen Schaumstoffhohlkörper aus reversibel verformbarem Material mit einer Vielzahl von zur Aufnahme von Gas, insbesondere Luft, dienenden Hohlräumen besitzt.

Die Erfindung betrifft auch einen Luftschlauch, nämlich einen Luftschlauch mit den Merkmalen des Anspruchs 5.

Vorteilhafte Ausgestaltungen der Erfindung gehen aus den abhängigen Ansprüchen hervor.

Nachfolgend wird anhand der beiliegenden Zeichnung die Erfindung näher beschrieben. In der Zeichnung zeigt
die Figur 1 ein Vorderrad eines Fahrrades,
die Figur 2 einen Schnitt entlang der Linie II-II der Figur 1 in vergrössertem Massstab,
die Figur 3 eine Teilansicht einer Fahrzeugbereifung, welche ohne separaten Luftschlauch auskommt und
die Figur 4 einen Schnitt entlang der Linie IV-IV der Figur 3 in vergrössertem Massstab.

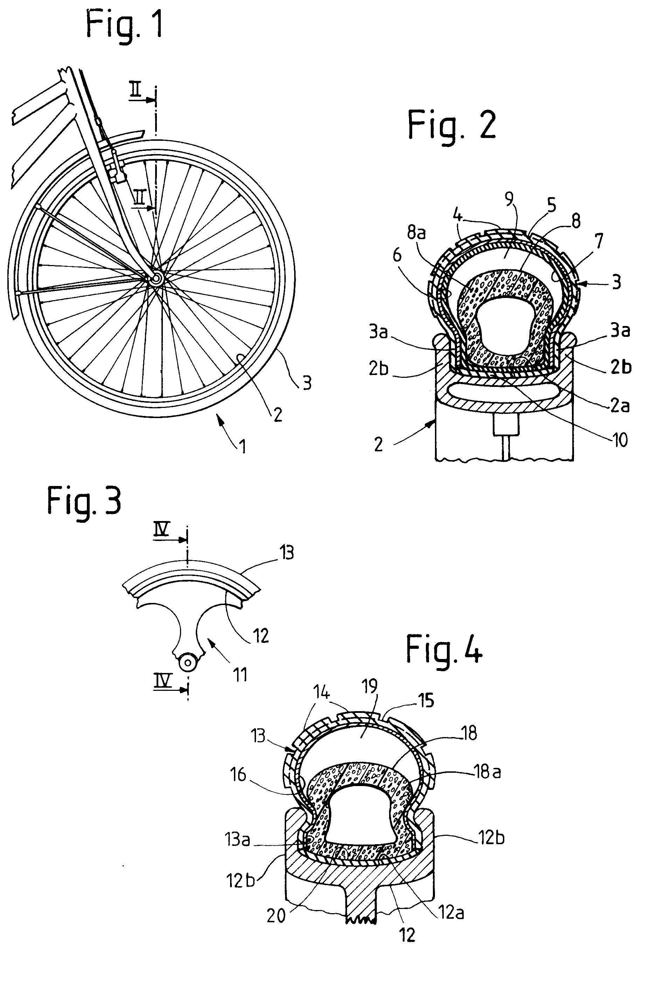

Die in den Figuren 1 und 2 dargestellte Fahrradbereifung zeigt ein als ganzes mit 1 bezeichnetes Laufrad mit einer Felge 2 und einem Luftreifen 3. Das dazugehörende Luftventil ist nicht eingezeichnet.

Die Felge 2 ist - wie übrigens alle auf dem Markt bekannten Fahrzeug-Felgen - genormt und besitzt vorgegebene Masse für die Felgenweite, Hornhöhe und Hornbreite. Der auf die Felgen-Masse abgestimmte Luftreifen 3 besteht in bekannter Weise aus einem kautschukelastischen Stoff, wie etwa aus natürlichem oder synthetischem Kautschuk oder aus einem geeigneten Thermoplasten. Wie aus der Figur 2 ersichtlich ist, besitzt der Luftreifen 3 an seiner Aussenseite einen das Reifenprofil 4 bildenden Laufstreifen 5 und an seiner Innenseite eine aus Verstärkungsfasern gebildete Karkasse 6.

Der Luftreifen 3 steckt im Felgenbett 2a, und zwar so, dass er mit seinen Rändern 3a satt passend an den Hornrändern 2b der Felge 2 anliegt. Im vom Reifen 3 und Felgenbett 2a begrenzten Zwischenraum ist ein Luftschlauch 7 und in diesem noch zusätzlich ein torusförmiger Schaumstoffhohlkörper 8 angeordnet. Letzterer füllt den Raum zwischen Reifenmantel und Felgenbett 2a im drucklosen Zustand etwa zur Hälfte (30 bis 70 %) aus und sitzt im aufgepumpten, fahrbereiten Zustand im Felgenbett 2a. Der Schaumstoffhohlkörper ist darüber hinaus so dimensioniert, dass sich zwischen dem das Reifenprofil 4 bildenden Laufstreifen 5 und dem Schaumstoffhohlkörper 8 ein Druckluft enthaltender Zwischenraum 9 bilden kann, wodurch im aufgepumpten Zustand ein über den ganzen Umfang des Laufrades 1 konstanter Pneudruck entsteht.

Zur konstanten Druckverteilung besteht der torusförmige Schaumstoffhohlkörper 8 aus einem reversibel verformbaren Kunststoff mit einer Vielzahl von zur Luftaufnahme dienenden, abgeschlossenen Hohlräumen. Die nachfolgend auch als Zellen 8a bezeichneten Hohlräume nehmen dabei - abhängig vom auferlegten Luftdruck - ein vergrössertes oder verkleinertes Volumen ein.

Als Material für die Bildung des torusförmigen Schaumstoffhohlkörpers 8 dient insbesondere ein polymerer organischer Werkstoff gemäss der europäischen DIN-Norm 7724 in der Form eines geschlossenzelligen Schaumstoffes gemäss der europäischen DIN-Norm 7726. Wesentliches Merkmal der erfindungsgemäss verwendbaren, weichen oder halbharten, geschlossenzelligen Materialien ist, dass sie sich unter Einwirkung eines äusseren Druckes komprimieren lassen und bei einer nachfolgenden Druckabnahme wieder entspannen, und zwar so, dass sie bei der vollständigen Entfernung des auferlegten Druckes wieder den ursprünglichen Zustand einnehmen. Der Kunststoff erzeugt also bei einer Kompression einen Gegendruck, so wie das nachfolgend noch erläutert wird. Hierbei zeigen bevorzugt verwendbare Kunststoffe das physikalische Verhalten gemäss der ISO-Norm 844 und erzeugen bei 10% Stauchung etwa 20 kPa Gegendruck. Beispiele für solche Stoffe sind mit einem Treibmittel behandelte, bzw. mit einem Gas oder Luft aufgeschäumte Kunststoffe oder Kunststoffgemische, wie etwa vernetzte oder unvernetzte Polyolefine, zum Beispiel Polyethylen, sowie Polyvinylchlorid, Polyurethan und natürliche oder synthetische Kautschuke. Damit der erfindungsgemäss verwendbare Schaumstoffkörper eine höhere Tragfähigkeit erhält, wird er bevorzugt in einem fahrbereiten, aufgepumpten Luftschlauch 7 oder Luftreifen 13 gelagert, der als Druckkammer dient. Dadurch diffundiert komprimierte Luft in die Zellen 8a. Das Gas, bzw. die Luft, in den Zellen 8a steht auf diese Weise unter einem Druck, der grösser ist als der Normaldruck, was zur Folge hat, dass der vorstehend genannte 20 kPa betragende Gegendruck um ein Mehrfaches erhöht werden kann.

Zur Herstellung eines erfindungsgemäss einen torusförmigen Schaumstoffhohlkörper einschliessenden Luftschlauches wird als erstes ein handelsüblicher Schlauch aufgeschnitten und das so aufgeschnittene Schlauchrohr in einer Evakuierungsröhre an mindestens ihren beiden Enden in gestreckter Lage lösbar befestigt. Anschliessend wir im Zwischenraum zwischen Evakuierungsröhre und Schlauch ein Unterdruck erzeugt, was zur Folge hat, dass sich der gestreckte Schlauch radial ausdehnt. Daraufhin lässt sich ein rohrförmiger Schaumstoffkörper in den so aufgespannten Schlauchkörper einschieben und es lassen sich dann nach dem Entfernen des Unterdruckes zuerst das Schaumstoffrohr zu einem torusförmigen Körper zusammenschweissen oder -kleben und anschliessend der Schlauch an seinen Schnittstellen verkleben, was zum Beispiel mit einem vulkanisierbaren Band erfolgen kann. Fahrrad-Schläuche, die sich besonders gut zur Aufnahme eines torusförmigen Schaumstoffhohlkörpers eignen sind zum Beispiel die unter dem Handelsnamen MICHELIN erhältlichen Schläuche des Typs AIRSTOP. Zur Herstellung des torusförmigen Schaumstoffhohlkörpers eignen sich besonders die physikalisch vernetzten und unter dem Handelsnamen ALVEOLIT (Typ TA3000) und ALVEOLEN (Typ NA3300) bekannten Polyethylen-Schaumstoffe.

Im entspannten Zustand besitzt der Schlauch vorzugsweise einen kleineren Querschnitt als der torusförmige Schaumstoffhohlkörper. Der im Schlauch eingeschlossene torusförmige Schaumstoffhohlkörper wird also im nicht aufgepumpten Zustand einem anhaltenden Druck seitens des Schlauches ausgesetzt, was zur Folge hat, dass der Schaumstoffhohlkörper komprimiert wird und eingeschlossene Luft in den Zwischenraum zwischen Torus und Schlauch abgibt, bis ein Druckgleichgewicht erreicht ist. Der in Bezug auf den Querschnitt des torusförmigen Schaumstoffhohlkörpers verringerte Schlauchquerschnitt erleichtert darüber hinaus die Montage des Schlauches am Felgen.

Zur Herstellung der in den Figuren 1 und 2 dargestellten Fahrradbereifung wird als erstes ein Felgenband 10 auf das Felgenbett 2a gezogen. Dann wird ein erster Reifenwulst über das eine Felgenhorn geschoben. Anschliessend setzt man in das noch teilweise aus der Felge 2 ragende Reifenbett den einen torusförmigen Schaumstoffhohlkörper 8 enthaltenden Luftschlauch 7 ein, drückt diesen zusammen mit dem zweiten Reifenwulst in das Felgenbett 2a hinein und befestigt den Schlauch 7 an der Felge 2, was vorzugsweise mittels des nicht gezeichneten Luftventils erfolgen kann. Dann wird der Schlauch 7 mit Luft aufgepumpt (was eine Kompression des torusförmigen Schaumstoffhohlkörpers 8 zur Folge hat), bis der gewünschte Reifendruck erreicht ist.

Vom Reifendruck ist die Tragfähigkeit des Luftreifens abhängig, wobei diese mit wachsender Reifengrösse und höherem Luftdruck zu- und mit zunehmender Fahrgeschwindigkeit abnimmt. Der optimale Reifendruck ist also nicht nur vom Fahrzeugtyp, sondern auch von der gewünschten Tragfähigkeit bzw. Belastungsgrenze abhängig. Er beträgt für Rennvelos etwa 8 bar, für Mountain-Bikes sowie Mofas etwa 2,5 bar bis 3,5 bar und für Personenfahrzeuge mittlerer Klasse etwa 2 bar bis 3 bar.

Beim Aufpumpen des Luftschlauches 7 wird der torusförmige Schaumstoffhohlkörper 8 - abhängig vom Gas- bzw. Luftdruck in den Zellen 8a - während eines Pumpvorganges zuerst zusammengepresst, wobei sich die Hohlräume bzw. Zellen 8a verkleinern und der Schaumstoffkörper schrumpft. Das Aufpumpen erzeugt auf der Seite des Schaumstoffkörpers 8 jedoch auch einen Widerstand, so dass aufgrund der dadurch entstehenden Druckdifferenz nachfolgend Luft in die Zellen 8a diffundiert, bis ein von den Eigenschaften des unter Druck stehenden Schaumstoffhohlkörpers 8 und dem erzeugten Reifendruck abhängiges Gleichgewicht erreicht ist. Die Masse des eingeschlossenen Gases kann dann im vollständig aufgepumpten Gleichgewichts-Zustand und abhängig vom auferlegten Druck um mehr als 20% grösser sein als im nicht aufgepumpten Zustand. Dadurch nimmt der Schaumstoffhohlkörper bei Entspannung auf Normaldruck ein grösseres Volumen ein als vor dem Aufenthalt in der Druckkammer.

Aufgrund des vorstehend beschriebenen Verhaltens des Schaumstoffhohlkörpers 8 während des Aufpumpens des Reifens setzt sich ersterer im Felgenbett 2a fest und gibt einen dem Laufstreifen 5 zugewandten und Druckluft enthaltenden Zwischenraum frei. Dies hat den Vorteil, dass der erfindungsgemäss behandelte Reifen genau die gleichen Fahreigenschaften besitzt, wie ein nicht behandelter Fahrradreifen und demzufolge einen verhältnismässig niedrigen Rollwiderstand aufweist.

In diesem Zusammenhang sei erwähnt, dass zum Beispiel aus der US-A 3'331'423 und der DE-A 1'936'526 Luftbereifungen bekannt sind, welche einen torusförmigen Schaumstoffhohlkörper und in diesem einen unter Druck stehenden Luftschlauch enthalten. Bei diesen beiden Bereifungsarten liegt der Schaumstoff also ausserhalb der Druckkammer. Auch mit diesen vorbekannten Bereifungen wird versucht, die scheinbar unvereinbaren Eigenschaften von Vollgummi- und Luftreifen miteinander zu kombinieren. Dies jedoch mit dem wesentlichen Nachteil, dass bei dieser Anordnung der Luftschlauch einen permanenten Druck auf den Schaumstoff ausübt, wodurch das Gas aus den Zellen diffundiert und der Schaumstoff irreversibel an Volumen verliert und dass derartige Reifen einen verhältnismässig hohen Rollwiderstand besitzen, was bekannterweise für Fahrräder und Mofas unerwünscht ist.

Die Figuren 3 und 4 zeigen eine zweite Möglichkeit einer Fahrzeugbereifung, nämlich eine solche, welche keinen separaten Luftschlauch besitzt, so wie das zum Beispiel für Motorräder und Autos bereits bekannt ist. Hierbei besitzt das in diesen Figuren gezeichnete Laufrad 11 eine speichenlose Verbundfelge 12 aus zum Beispiel metallischem Material und einen Luftreifen 13. Letzterer besitzt an seiner Aussenseite einen das Reifenprofil 14 bildenden Laufstreifen 15 und an seiner Innenseite eine aus Verstärkungsfasern gebildete Karkasse 16. Der Luftreifen 13 steckt zudem im Felgenbett 12a, und zwar so, dass er mit seinen Rändern 13a satt passend an den Hornrändern 12b und am Felgenband 20 anliegt und den vom Reifen 13 eingeschlossenen Zwischenraum luftdicht abschliesst. Im vom Reifen 13 und Felgenbett 12a begrenzten Zwischenraum ist der erfindungsgemässe Schaumstoffhohlkörper 18 angeordnet und gegebenenfalls noch zusätzlich befestigt. Dieser steht im aufgepumpten Zustand des Laufrades unter Druck und sitzt - wie der Schaumstoffhohlkörper 8 - im Felgenbett 12a, gibt also einen mit Druckluft gefüllten und an den Laufstreifen 15 angrenzenden Zwischenraum 19 frei.

Der wesentliche Vorteil der erfindungsgemässen Bereifung liegt auf der Hand. Eine Verletzung der Reifenhaut und des gegebenenfalls vorhandenen Luftschlauches durch einen Stein oder Nagel führt nämlich nicht zwangsläufig zu einem sofortigen und vollständigen Luftverlust. So hat der torusförmige Schaumstoffhohlkörper 8 bzw. 18 die Eigenschaft, Luft in den Zellen 8a zu halten bzw. zu speichern. Die im Schaumstoffhohlkörper 8 gespeicherte Luft wird nämlich bei einer lokalen Verletzung des Reifens 3 oder Luftschlauches 7 nicht oder nur zögernd entweichen. Dazu kommt, dass bei einer Verletzung des Reifens 3 bzw. 13 und/oder des Luftschlauches 7 der Luftdruck im Schlauch 7 bzw. im Luftreifen 3 bzw. 13 abnimmt und dass dann der torusförmige Schaumstoffhohlkörper 8 bzw. 18 expandiert und dadurch den Luftverlust im Luftschlauch 7 bzw. Luftreifen 13 zumindest teilweise kompensiert. Bei einer Verletzung der erfindungsgemässen Bereifung bleibt also noch für mindestens eine gewisse Zeit Luft im torusförmigen Schaumstoffhohlkörper 8 bzw. 18 gespeichert, was nicht nur das Weiterfahren für eine gewisse Zeit ermöglicht, sondern auch die Unfallgefahr bei einer Reifenpanne verringert.

Die erfindungsgemässe Bereifung erhöht vor allem im Falle einer Fahrradbereifung noch zusätzlich die Robustheit des Laufrades. So reduzieren die Dämpfungseigenschaften des Kunststoffes die Gefahr einer Verletzung des Luftschlauches durch Einklemmen desselben zwischen einem scharfkantigen Hindernis, wie zum Beispiel einem Randstein, und der Felge. Dies lässt sich insbesondere dadurch erklären, dass der torusförmige Schaumstoffhohlkörper 8 beim Auffahren auf einen Randstein nicht nachgibt, was ein Einklemmen des Luftschlauches möglich machen würde, sondern sich durch den Auffahrdruck verdichtet und dabei erhärtet.

Weitere Vorteile der erfindungsgemässen Bereifung sind darin zu sehen, dass die schalldämpfenden Eigenschaften des erfindungsgemäss verwendbaren Kunststoffes die Rollgeräusche des Laufrades reduzieren und dass der im Luftschlauch eingeschlossene Schaumstoff-Torus beim Aufziehen des Luftschlauches auf einen Felgen ein Anpumpen des Schlauches unnötig macht. Darüber hinaus bewirkt der Hohlraum im erfindungsgemässen torusförmigen Schaumstoffkörpers eine Gewichtsreduktion. Der genannte Hohlraum stellt ferner sicher, dass der Schaumstoff-Torus bei einem Druckverlust satt an der Innenseite des Reifenmantels anliegt und erleichtert nach der vorstehend beschriebenen Volumenzunabme infolge der Gasdiffusion die Demontage des Reifens von der Felge. Hierin unterscheidet sich der torusförmige Schaumstoffhohlkörper von den vorbekannten Patent- bzw. Offenlegungsschriften US-A 4'058'152, FR-A 2'236'674, WO 91/10705 oder US 581'810.

Versuche haben schliesslich noch gezeigt, dass die Expansion des torusförmigen Schaumstoffhohlkörpers 8 bzw. 18 bei einem plötzlichen Luftverlust nicht nur von der Materialbeschaffenheit des Schaumstoffes, sondern auch vom auf den Schaumstoffhohlkörper 8 bzw. 18 einwirkenden, maximalen Pneudruck abhängig ist. So hat sich gezeigt, dass bei einem maximalen Pneudruck von 2 bis 5 bar die Expansion des torusförmigen Schaumstoffhohlkörpers 8 bzw. 18 noch mindestens bis zur ursprünglichen, nicht-komprimierten Form erfolgt.

Es sei abschliessend noch darauf hingewiesen, dass die anhand der Figuren 1 bis 4 beschriebenen Bereifungen nur eine Auswahl von mehreren möglichen Ausführungsformen der Erfindung darstellen und in verschiedener Hinsicht geändert werden können.

So kann die erfindungsgemässe Bereifung nicht nur für Fahrräder, sondern auch für Mofas, Anhänger, Handwagen, Rollstühle, Motorräder und Automobile, sowie auch für andere Kraftfahrzeuge oder Flugzeuge vorgesehen werden, welche bevorzugt mit Luftreifen ausgestattet sind.

## Patentansprüche

1. Für ein Fahrzeug bestimmtes Laufrad (1, 11) mit einer Felge (2, 12) und einem im Felgenbett (2a, 12a) eingesetzten Luftreifen (3, 13), gekennzeichnet durch einen vom Luftreifen (3, 13) eingeschlossenen torusförmigen Schaumstoffhohlkörper (8, 18) aus reversibel verformbarem Material mit einer Vielzahl von zur Aufnahme von Gas dienenden, geschlossenen Hohlräumen (8a, 18a).

2. Laufrad nach Anspruch 1, dadurch gekennzeichnet, dass das Material des torusförmigen Schaumstoffhohlkörpers (8, 18) aus mindestens einem der folgenden Kunststoffe oder Kunststoffgemische besteht: vernetzte oder unvernetzte Polyolefine, Polyvinylchlorid, natürliche oder synthetische Kautschuke.

3. Laufrad nach einem der Ansprüche 1 oder 2, dadurch gekennzeichnet, dass der torusförmige Schaumstoffhohlkörper (18) an der Felge (12) befestigt ist.

4. Laufrad nach Anspruch 1 oder 2, dadurch gekennzeichnet, dass der Schaumstoffhohlkörper (8) in einem Luftschlauch (7) eingeschlossen ist.

5. Laufrad nach Anspruch 4, dadurch gekennzeichnet, dass der Luftschlauch (7) an der Felge (2) befestigt ist.

6. Laufrad nach einem der Ansprüche 1 bis 5, dadurch gekennzeichnet, dass der ringförmige Schaumstoffhohlkörper (8, 18) im aufgepumpten, fahrbereiten Zustand des Reifens (3, 13) im Felgenbett (2a, 12a) sitzt und darüber hinaus so dimensioniert ist, dass ebenfalls im aufgepumpten Zustand ein Druckluft enthaltender Zwischenraum (9, 19) zwischen dem das Reifenprofil (4, 14) bildenden Laufstreifen (5, 15) und dem Schaumstoffhohlkörper (8, 18) vorhanden ist.

7. Für ein Fahrzeug bestimmter Luftschlauch (7), dadurch gekennzeichnet, dass er einen torusförmigen Schaumstoffhohlkörper (8) enthält, der aus einem reversibel verformbaren Material mit einer Vielzahl von zur Aufnahme von Luft, bzw. Gas dienenden Hohlräumen (8a) besteht.
